# EUROPEAN PATENT SPECIFICATION

(11) **EP 4 468 221 B1**
(45) Date of publication and mention of the grant of the patent: **23.09.2026**
(21) Application number: 23769500.2
(22) Date of filing: 16.02.2023
(51) Int. Cl.: G06Q 10/08, G06Q 10/047

(54) **GOODS DELIVERY METHOD AND APPARATUS, AND SERVER**
VERFAHREN UND SERVER ZUR WARENLIEFERUNG
PROCÉDÉ ET APPAREIL DE DISTRIBUTION DE MARCHANDISES, ET SERVEUR

(30) Priority: 15.03.2022 CN 202210252695
(43) Date of publication of application: 27.11.2024
(73) Proprietor: Hai Robotics Co., Ltd., Shenzhen, Guangdong 518000 (CN)
(72) Inventor: YU, Runfang, Shenzhen, Guangdong 518000 (CN)
(74) Representative: Gulde & Partner
(86) International application number: PCT/CN2023/076440
(87) International publication number: WO 2023/173992

(56) References cited:
- WO-A1-2020/233227
- CN-A- 107 977 763
- CN-A- 109 118 137
- CN-A- 109 118 137
- CN-A- 111 126 688
- CN-A- 111 796 596
- CN-A- 113 011 659
- CN-A- 113 283 834
- CN-A- 113 283 834
- CN-A- 113 298 467
- CN-A- 113 592 408
- CN-A- 114 596 035

## Description

### TECHNICAL FIELD

The present disclosure relates to the field of intelligent warehousing technologies, and in particular, to a goods delivery method and apparatus, and a device.

### BACKGROUND OF THE INVENTION

To ensure production efficiency, production lines have been widely used. To ensure operation efficiency of a production line, a temporary storage warehouse is usually set up next to the production line. The temporary storage warehouse, or referred to as a lineside warehouse, can shorten the distance of delivering goods to the production line.

To improve delivery efficiency, a robot is usually used to complete delivery of the goods. In the prior art, a single-bin robot is usually used for delivery.

However, when a plurality of production lines require goods or goods are required at different locations of a same production line, the single-bin robot needs to repeatedly travel between delivery points and retrieve points, resulting in low delivery efficiency.

Chinese patent application CN113283834A discloses a transportation path planning method and system. The method comprises the following steps: S100, collecting a starting point and a plurality of target points; s200, calculating a transportation distance between every two target points; s300, performing first clustering grouping on the plurality of target points based on the transportation distance to obtain at least one clustering group; s400, the total load weight corresponding to each clustering group is obtained, and the load weight represents the sum of the load weights of the multiple target points in each clustering group; and S500, adjusting the target points in the clustering groups based on a preset weight so as to enable a weight difference value between the total load amount of each adjusted clustering group and the preset weight to be within a preset range.

Chinese patent CN107977763B discloses a resource distribution method and a related device. The resource distribution server provides the first correspondence between the distribution location of the resource and the resource weight, and can cluster the resources according to the first correspondence and the load quota of the robot into Multiple clusters, each of which includes resources with a combined weight less than the payload. After a batch of resources including at least one cluster is determined for the robot according to the plurality of clusters, the batch of resources can be allocated to the robot.

Chinese patent CN109118137B discloses an order processing method, a device, a server and a storage medium. The method comprises the following steps: combining the orders to be processed into at least one picking order group by a combination mode according to the goods overlap degree of the orders to be processed in the order pool; Selecting a target picking order group from the at least one picking order group, the first target robot is controlled to perform target shelf transportation according to the target picking order group, so that the target picking station performs order goods picking according to the target picking order group, and the target shelf contains goods associated with the target picking order group.

Chinese patent CN111126688B discloses a delivery route determination method, device, electronic equipment, and readable storage medium, wherein the delivery route determination method includes: clustering all delivery locations according to the location information of each delivery location in the total delivery area, to Form multiple target delivery areas; each target delivery area contains at least one delivery location; for each target delivery area, determine whether there is a historical delivery route belonging to the delivery location in the target delivery area; The delivery route is used as the initial delivery route, and the optimal solution algorithm is used to iterate the initial delivery route to generate the optimal delivery route for the target delivery area.

### SUMMARY OF THE INVENTION

The present disclosure provides a goods delivery method and apparatus, and a device, which can control a multi-bin robot to complete delivery of goods in a lineside warehouse, and can optimize a process of delivery by the multi-bin robot, thereby improving delivery efficiency. The invention is set out in the appended set of claims.

According to a first aspect, the present disclosure provides a goods delivery method, including: obtaining delivery requirements of a plurality of delivery points in a delivery task; grouping the plurality of delivery points into at least one delivery point group according to the delivery requirements of the delivery points and a delivery capacity of a robot; determining a target delivery route corresponding to one delivery point group in the at least one delivery point group; and controlling, according to the target delivery route, a first robot to deliver goods corresponding to the one delivery point group in the delivery task to the delivery points in the one delivery point group.

Optionally, the grouping the plurality of delivery points into the at least one delivery point group according to the delivery requirements of the delivery points and the delivery capacity of the robot includes:
determining whether a saturated delivery point exists in the plurality of delivery points, where a delivery requirement of the saturated delivery point is greater than the delivery capacity of the robot;
determining, if the saturated delivery point exists, a difference between the delivery requirement of the saturated delivery point and the delivery capacity of the robot as a new delivery requirement of the saturated delivery point; and
grouping the plurality of delivery points into the at least one delivery point group according to the new delivery requirement of the saturated delivery point, delivery requirements of the plurality of delivery points except the saturated delivery point, and the delivery capacity of the robot.

Optionally, the grouping the plurality of delivery points into the at least one delivery point group according to the new delivery requirement of the saturated delivery point, the delivery requirements of the plurality of delivery points except the saturated delivery point, and the delivery capacity of the robot includes:
determining whether a sum of the new delivery requirement of the saturated delivery point and the delivery requirements of the plurality of delivery points except the saturated delivery point is greater than the delivery capacity of the robot; and
grouping, if the sum is greater than the delivery capacity of the robot, the plurality of delivery points into the at least one delivery point group according to the new delivery requirement of the saturated delivery point, the delivery requirements of the plurality of delivery points except the saturated delivery point, and the delivery capacity of the robot.

Optionally, the method further includes:
determining the plurality of delivery points as one delivery point group if the sum is less than or equal to the delivery capacity of the robot.

Optionally, the grouping the plurality of delivery points into the at least one delivery point group according to the delivery requirements of the delivery points and the delivery capacity of the robot includes:
obtaining location information of the delivery points;
selecting a first quantity of delivery points as first cluster centers;
determining distances between the location information of the delivery points and the first cluster centers;
clustering all the delivery points according to the distances, to form a first quantity of first delivery point groups;
determining group delivery requirements of the first delivery point groups according to delivery requirements of delivery points in the first delivery point groups separately; and
determining the at least one delivery point group according to the group delivery requirements, the delivery capacity of the robot, and the first quantity of first delivery point groups.

Optionally, the determining the at least one delivery point group according to the group delivery requirements, the delivery capacity of the robot, and the first quantity of first delivery point groups includes:
comparing the group delivery requirements separately with the delivery capacity of the robot; and if all the group delivery requirements are less than or equal to the delivery capacity of the robot, determining the first quantity of first delivery point groups as the at least one delivery point group.

Optionally, the determining the at least one delivery point group according to the group delivery requirements, the delivery capacity of the robot, and the first quantity of first delivery point groups includes:
comparing the group delivery requirements separately with the delivery capacity of the robot; and if at least one group delivery requirement is greater than the delivery capacity of the robot, selecting a second quantity of delivery points as second cluster centers, re-clustering all the delivery points to obtain a second quantity of second delivery point groups, and determining the second quantity of second delivery point groups as the at least one delivery point group, where the second quantity is greater than the first quantity.

Optionally, the determining the at least one delivery point group according to the group delivery requirements, the delivery capacity of the robot, and the first quantity of first delivery point groups includes:
comparing the group delivery requirements separately with the delivery capacity of the robot; and if at least one group delivery requirement is greater than the delivery capacity of the robot, using the delivery point group with a group delivery requirement greater than the delivery capacity of the robot in the first delivery point groups as a third delivery point group, and re-clustering delivery points in the third delivery point group according to location information and delivery requirements of the delivery points in the third delivery point group and the delivery capacity of the robot, to form at least one fourth delivery point group; and
determining the fourth delivery point group and the first delivery point groups except the third delivery point group as the at least one delivery point group.

Optionally, before the selecting the first quantity of delivery points as the first cluster centers, the method further includes:
determining a total delivery requirement of all the delivery points according to the delivery requirements of the delivery points; and
determining the first quantity according to a ratio of the total delivery requirement to the delivery capacity of the robot, where the first quantity is an integer greater than or equal to the ratio.

Optionally, the determining the target delivery route corresponding to the one delivery point group in the at least one delivery point group includes:
obtaining location information of the first robot corresponding to the one delivery point group in the at least one delivery point group; and
determining the target delivery route according to location information of the delivery points in the one delivery point group and the location information of the first robot.

Optionally, the determining the target delivery route according to the location information of the delivery points in the one delivery point group and the location information of the first robot includes:
determining a distance matrix corresponding to the one delivery point group, where the distance matrix includes distances between locations of the delivery points in the one delivery point group and the location information of the first robot;
randomly generating an initial route corresponding to the delivery point group according to the distance matrix;
performing iteration on the initial route according to the distance matrix, and stopping the iteration when a preset condition is met; and
determining the target delivery route according to an iteration result.

Optionally, the determining the target delivery route corresponding to the one delivery point group in the at least one delivery point group includes:
obtaining the pre-stored target delivery route corresponding to the one delivery point group in the at least one delivery point group.

Optionally, the delivery point group includes P delivery points; and before the obtaining the pre-stored target delivery route corresponding to the one delivery point group in the at least one delivery point group, the method further includes:
determining a first delivery route according to location information of the delivery points in the one delivery point group in the at least one delivery point group and location information of the first robot;
controlling, according to the first delivery route, the first robot to deliver goods corresponding to the delivery task to a Q^{th} delivery point in the delivery point group; and
determining and storing the target delivery route according to location information of P-Q delivery points to which delivery has not been completed in the delivery point group and start location information of the first robot.

Optionally, the method further includes:
in the process of controlling, according to the target delivery route, the first robot to deliver the goods corresponding to the delivery task to the delivery points in the delivery point group, determining a second delivery route according to location information of a first delivery point to which delivery has not been completed in the delivery point group and current location information of the first robot; and
controlling, according to the second delivery route, the first robot to deliver goods corresponding to the delivery task to the first delivery point to which delivery has not been completed in the delivery point group.

Optionally, before the controlling, according to the target delivery route, the first robot to deliver the goods corresponding to the delivery task to the delivery points in the delivery point group, the method further includes:
determining the first robot from a plurality of robots according to location information of the delivery points in the delivery point group and location information of the plurality of robots, where a distance between the first robot and the delivery point group is less than or equal to a preset value.

Optionally, goods corresponding to the delivery task are located on a conveyor; and before the controlling, according to the target delivery route, the first robot to deliver the goods corresponding to the delivery task to the delivery points in the delivery point group, the method further includes:
determining a delivery sequence of the delivery points in the delivery point group according to the target delivery route;
determining a goods delivery sequence of goods according to the goods required by the delivery points and the delivery sequence; and
controlling a second robot to sequentially transfer the goods to the conveyor according to the goods delivery sequence, and controlling the first robot to retrieve the goods from the conveyor.

Optionally, goods corresponding to the delivery task are located on a buffer shelving unit; and before the controlling, according to the target delivery route, the first robot to deliver the goods corresponding to the delivery task to the delivery points in the delivery point group, the method further includes:
determining the goods corresponding to the delivery point group according to the delivery task; and
controlling the first robot to retrieve the goods from the buffer shelving unit.

According to a second aspect, the present disclosure provides a goods delivery apparatus, including:
an obtaining module, configured to obtain delivery requirements of a plurality of delivery points in a delivery task; and
a processing module, configured to group the plurality of delivery points into at least one delivery point group according to the delivery requirements of the delivery points and a delivery capacity of a robot, where
the processing module is further configured to determine a target delivery route corresponding to one delivery point group in the at least one delivery point group; and
the processing module is further configured to control, according to the target delivery route, a first robot to deliver goods corresponding to the one delivery point group in the delivery task to the delivery points in the one delivery point group.

According to a third aspect, the present disclosure provides an electronic device, including: at least one processor; and a memory communicatively connected to the at least one processor, where the memory stores instructions executable by the at least one processor, and the instructions are executed by the at least one processor to cause the at least one processor to perform the method according to the first aspect and the optional manners of the first aspect.

According to a fourth aspect, the present disclosure provides a computer-readable storage medium, storing computer-executable instructions, where when executed by a processor, the computer-executable instructions are configured to implement the method according to the first aspect or the optional manners of the first aspect.

According to a fifth aspect, the present disclosure provides a computer program product, including computer programs/instructions, where the computer programs/instructions, when executed by a processor, implement the method according to the first aspect or the optional manners of the first aspect.

In the goods delivery method and apparatus, and the device provided in the present disclosure, delivery requirements of a plurality of delivery points in a delivery task are obtained; the plurality of delivery points are grouped into at least one delivery point group according to the delivery requirements of the delivery points and a delivery capacity of a robot; a target delivery route corresponding to one delivery point group in the at least one delivery point group is determined; and according to the target delivery route, a first robot is controlled to deliver goods corresponding to the one delivery point group in the delivery task to the delivery points in the one delivery point group. In this way, a multi-bin robot can be controlled to complete delivery of goods in a lineside warehouse, and a process of delivery by the multi-bin robot can be optimized, thereby improving delivery efficiency.

### BRIEF DESCRIPTION OF DRAWINGS

Accompanying drawings herein are incorporated into and constitute a part of this specification, show embodiments that conform to the present disclosure, and are used together with this specification to describe the principle of the present disclosure.
FIG. 1 is a schematic diagram of an application scenario of a goods delivery method according to the present disclosure;
FIG. 2 is a schematic flowchart of a goods delivery method according to the present disclosure;
FIG. 3 is a schematic flowchart of another goods delivery method according to the present disclosure;
FIG. 4 is a schematic flowchart of still another goods delivery method according to the present disclosure;
FIG. 5 is a schematic flowchart of yet another goods delivery method according to the present disclosure;
FIG. 6 is a schematic flowchart of yet another goods delivery method according to the present disclosure;
FIG. 7 is a schematic structural diagram of a goods delivery apparatus according to the present disclosure; and
FIG. 8 is a schematic structural diagram of an electronic device according to the present disclosure.

Specific embodiments of the present disclosure have been shown through the foregoing accompanying drawings and will be described in more detail below. These accompanying drawings and text descriptions are not intended to limit the scope of concepts of the present disclosure in any manner, but rather to describe the concepts of the present disclosure for a person skilled in the art by referring to specific embodiments.

### DETAILED DESCRIPTION

Exemplary embodiments are described in detail herein, and examples of the exemplary embodiments are shown in the accompanying drawings. When the following description involves the accompanying drawings, unless otherwise indicated, the same numerals in different accompanying drawings represent the same or similar elements. The following implementations described in the following exemplary embodiments do not represent all implementations that are consistent with the present disclosure. Instead, they are merely examples of the apparatus and method according to some aspects of the present disclosure as recited in the appended claims.

To ensure production efficiency, production lines have been widely used. To ensure operation efficiency of a production line, a temporary storage warehouse is usually set up next to the production line. The temporary storage warehouse, or referred to as a lineside warehouse, can shorten the distance of delivering goods to the production line. To improve delivery efficiency, a robot is usually used to complete delivery of the goods. In the prior art, a single-bin robot is usually used for delivery. When a plurality of production lines require goods or goods are required at different locations of a same production line, the single-bin robot needs to repeatedly travel between delivery points and retrieve points, resulting in low delivery efficiency. In addition, the probability of interlace operations of robots is high, and the probability of robot collision is high, increasing the difficulty of controlling the robots.

If delivery can be performed for a plurality of delivery points by using a multi-bin robot, the foregoing problems can be solved. However, the multi-bin robot travels among a plurality of different delivery points, and how to ensure delivery efficiency of the robot is a problem that needs to be solved urgently.

Based on this, the present disclosure provides a goods delivery method. First, a plurality of delivery points corresponding to a delivery task are grouped according to delivery requirements of the delivery points and a delivery capacity of a robot, so that a total delivery requirement of each delivery point group matches the delivery capacity of the robot. Then, for each delivery point group, a high-efficiency delivery route is planned or a pre-stored delivery route is obtained, and the robot is controlled to complete a delivery task corresponding to the delivery point group, thereby controlling a multi-bin robot to efficiently complete the delivery task for the plurality of delivery points.

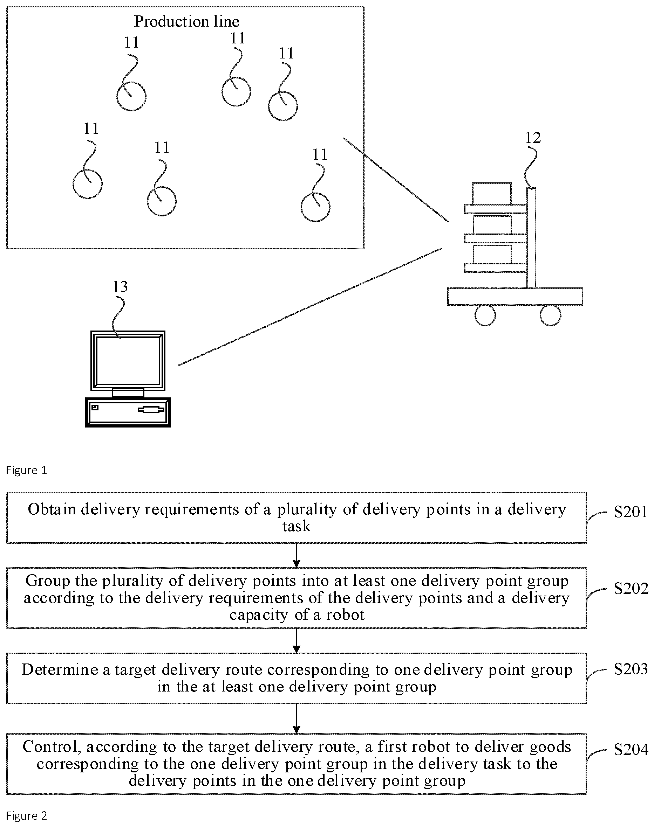

FIG. 1 is a schematic diagram of an application scenario of a goods delivery method according to the present disclosure. The method may be applied to a scenario including a plurality of delivery points 11, a first robot 12, and an electronic device 13.

The electronic device 13 is configured to obtain location information of the plurality of delivery points 11 and delivery requirements of the delivery points 11 in a delivery task; group the plurality of delivery points 11 into at least one delivery point group according to the location information of the delivery points 11, the delivery requirements of the delivery points 11, and a delivery capacity of a robot; determine a target delivery route corresponding to one delivery point group in the at least one delivery point group; and control, according to the target delivery route, the first robot 12 to deliver goods corresponding to the one delivery point group in the delivery task to delivery points 11 in the delivery point group.

The first robot 12 delivers the goods corresponding to the delivery task to the delivery points 11 in the delivery point group according to a received control instruction.

The application scenario of the goods delivery method provided in the present disclosure includes a goods storage area on a side of a production line. The goods storage area may be a buffer shelving unit or a conveyor. It should be understood that, the application scenario of the goods delivery method provided in the present disclosure is not limited to the foregoing case.

The first robot 12 is configured to transfer the goods from the goods storage area to the corresponding delivery points.

FIG. 2 is a schematic flowchart of a goods delivery method according to the present disclosure. The method is applied to a control terminal. As shown in FIG. 2, the method includes the following steps.

S201: obtaining delivery requirements of a plurality of delivery points in a delivery task.

The plurality of delivery points are located around a production line. The delivery requirements of the delivery points may be the same or different. The control terminal may parse the received delivery task, to obtain the delivery requirements of the plurality of delivery points in the delivery task; or may receive the delivery requirements of the plurality of delivery points sent by an upper layer device.

A delivery requirement of a delivery point includes information such as a type and a quantity of goods required by the delivery point.

S202: grouping the plurality of delivery points into at least one delivery point group according to the delivery requirements of the delivery points and a delivery capacity of a robot.

The delivery capacity of the robot is a total quantity or a total volume of goods that the robot can transfer once.

A delivery point group may include one or more delivery points. As described below, suitable clustering and grouping are performed on delivery points waiting for delivery according to delivery requirements of the delivery points and the delivery capacity of the robot, and each robot performs delivery to one delivery point group. Further, each robot performs optimal delivery for a delivery task in the group of the robot, for example, may perform delivery according to a shortest distance route. The concept of the delivery point group is used to allocate a multi-bin robot and perform route planning, so that a complex delivery algorithm can be simplified, and higher delivery efficiency can be obtained.

For example, if a delivery requirement of a first delivery point in a plurality of delivery point groups is equal to the delivery capacity of the robot, the first delivery point is determined as one delivery point group; and if a delivery requirement of a second delivery point in the plurality of delivery point groups is greater than the delivery capacity of the robot, at least one delivery point group is determined according to the delivery requirement of the second delivery point, where a total delivery requirement corresponding to each delivery point group is equal to the delivery capacity of the robot, so that a remaining delivery requirement of the second delivery point is less than the delivery capacity of the robot. If a remaining capacity of the second delivery point is 0, a plurality of third delivery points are grouped into at least one delivery point group according to delivery requirements of the plurality of third delivery points in the plurality of delivery point groups and the delivery capacity of the robot, where a total delivery requirement of each delivery point group is less than or equal to the delivery capacity of the robot; and if the remaining capacity of the second delivery point is greater than 0 and less than the delivery capacity of the robot, the second delivery point and the plurality of third delivery points are grouped into at least one delivery point group according to the remaining requirement of the second delivery point, the delivery requirements of the plurality of third delivery points in the plurality of delivery point groups, and the delivery capacity of the robot, where a total delivery requirement of each delivery point group is less than or equal to the delivery capacity of the robot.

Optionally, for delivery points with delivery requirements less than the delivery capacity of the robot or remaining delivery requirements less than the delivery capacity of the robot, clustering and grouping may also be performed on the plurality of delivery points based on location information of the delivery points and a K-means clustering algorithm.

S203: determining a target delivery route corresponding to one delivery point group in the at least one delivery point group.

The target delivery route is a route covering all delivery points in the delivery point group.

The target delivery route may be planned according to locations of the delivery points in the delivery point group and a preset route planning principle, where the preset rule may be the principle of shortest delivery time, the principle of nearest delivery, or the like. The target delivery route may also be obtained from pre-stored delivery routes. Similarly, a target delivery route corresponding to each delivery point group in the at least one delivery point group may be determined.

S204: controlling, according to the target delivery route, a first robot to deliver goods corresponding to the one delivery point group in the delivery task to the delivery points in the one delivery point group.

The first robot is controlled to complete a delivery task for one of the delivery points according to the determined target delivery route, further, the first robot is controlled to complete delivery tasks for the delivery points according to the determined target delivery route.

The first robot is a multi-bin robot.

Optionally, before S204, the method further includes: determining the first robot from a plurality of robots according to location information of the delivery points in the delivery point group and location information of the plurality of robots.

A distance between the first robot and the delivery point group is less than or equal to a preset value.

Through the method, a nearest robot can be selected to complete a delivery task corresponding to a delivery point group, to shorten dispatching distances of robots, reduce the difficulty of dispatching the robots, and reduce interlace operations of the robots, thereby improving delivery efficiency of the robots, and ensuring safety of a process of delivery by the robots.

Optionally, when goods corresponding to the delivery task are located on a conveyor, before S204, the method further includes: determining a delivery sequence of the delivery points in the delivery point group according to the target delivery route; determining a goods delivery sequence of goods according to the goods required by the delivery points and the delivery sequence; and controlling a second robot to sequentially transfer the goods to the conveyor according to the goods delivery sequence, and controlling the first robot to retrieve the goods from the conveyor.

Through the method, goods corresponding to each delivery point group can be continuously placed on the conveyor, to improve retrieving efficiency of the first robot, and reduce unnecessary waiting time, thereby improving delivery efficiency.

Optionally, when goods corresponding to the delivery task are located on a buffer shelving unit, before S204, the method further includes: determining the goods corresponding to the delivery point group according to the delivery task; and controlling the first robot to retrieve the goods from the buffer shelving unit.

When the goods are located on the conveyor, because boxes placed on the conveyor are in a sequence, there are limitations on manners and sequences for transferring boxes in a storage warehouse and placing the boxes, to improve efficiency of transferring the goods to the delivery points by the first robot. In other words, efficiency corresponding to warehouses on two sides affects each other. That is, to improve delivery efficiency, transferring efficiency for some storage warehouses is sacrificed. If the transferring efficiency is maximized, efficiency of a delivery warehouse is further affected. When the goods are located on the buffer shelving unit, the warehouses on the two sides are decoupled. Transferring the goods from the storage warehouse via a bin and transferring the goods by the first robot to the delivery points are almost completely independent, and efficiency of the two can be optimized and is not affected.

Through the method, the robot can accurately retrieve goods corresponding to each delivery point group, thereby improving accuracy of the delivery process.

According to the goods delivery method provided in the present disclosure, delivery requirements of a plurality of delivery points in a delivery task are obtained; the plurality of delivery points are grouped into at least one delivery point group according to the delivery requirements of the delivery points and a delivery capacity of a robot; a target delivery route corresponding to one delivery point group in the at least one delivery point group is determined; and according to the target delivery route, a first robot is controlled to deliver goods corresponding to the one delivery point group in the delivery task to the delivery points in the one delivery point group. In this way, a process of delivery by a multi-bin robot can be optimized, thereby improving delivery efficiency.

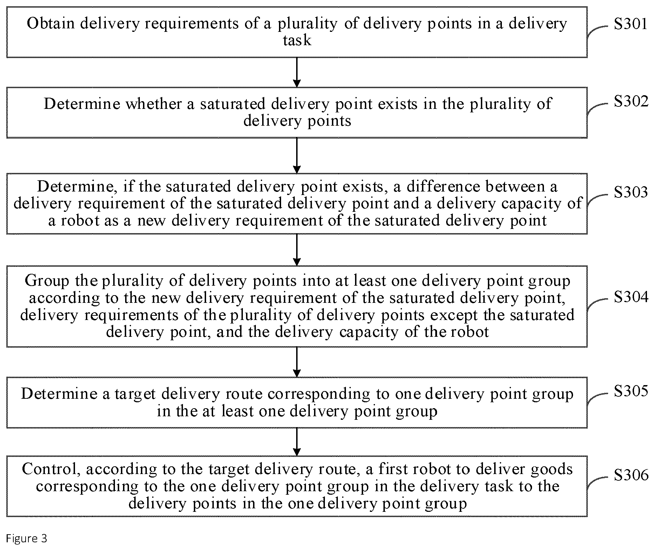

FIG. 3 is a schematic flowchart of another goods delivery method according to the present disclosure. The method is applied to a control terminal. How to group a plurality of delivery points into at least one delivery point group according to delivery requirements of the delivery points and a delivery capacity of a robot is further described in FIG. 3. As shown in FIG. 3, the method includes:
S301: obtaining the delivery requirements of the plurality of delivery points in a delivery task.
S302: determining whether a saturated delivery point exists in the plurality of delivery points.

A delivery requirement of the saturated delivery point is greater than the delivery capacity of the robot.

The saturated delivery point may be a saturated delivery point of a first type in which a delivery requirement is greater than the delivery capacity of the robot and a ratio of the delivery requirement to the delivery capacity of the robot is an integer; or may be a saturated delivery point of a second type in which a delivery requirement is greater than the delivery capacity of the robot and a ratio of the delivery requirement to the delivery capacity of the robot is not an integer.

S303: determining, if the saturated delivery point exists, a difference between the delivery requirement of the saturated delivery point and the delivery capacity of the robot as a new delivery requirement of the saturated delivery point.

Specifically, if the saturated delivery point is the saturated delivery point of the second type in which the delivery requirement is greater than the delivery capacity of the robot and the ratio of the delivery requirement to the delivery capacity of the robot is not an integer, if the delivery requirement of the saturated delivery point of the second type is greater than N*the delivery capacity of the robot and less than M*the delivery capacity of the robot, a difference between the delivery requirement of the saturated delivery point of the second type and N*the delivery capacity of the robot is determined as the new delivery requirement of the saturated delivery point, where N and M are positive integers.

If the delivery requirement of the saturated delivery point is an integer multiple of the delivery capacity of the robot, it is considered that the new delivery requirement of the saturated delivery point is zero, that is, the saturated delivery point does not need to be added to subsequent delivery point group division.

In the foregoing two cases, when the delivery requirement of the saturated delivery point is the integer multiple of the delivery capacity of the robot, a robot may be individually assigned to perform delivery. In other words, it is not necessary to consider the delivery requirements in subsequent delivery point group division. In an embodiment, a robot may be assigned to perform delivery to the saturated delivery point. In an embodiment, if a delivery requirement of the saturated delivery point is many times the delivery capacity of the robot, a plurality of robots may be assigned to perform delivery to the saturated delivery point.

S304: grouping the plurality of delivery points into the at least one delivery point group according to the new delivery requirement of the saturated delivery point, delivery requirements of the plurality of delivery points except the saturated delivery point, and the delivery capacity of the robot.

In a possible implementation, the grouping the plurality of delivery points into the at least one delivery point group according to the new delivery requirement of the saturated delivery point, the delivery requirements of the plurality of delivery points except the saturated delivery point, and the delivery capacity of the robot includes: determining whether a sum of the new delivery requirement of the saturated delivery point and the delivery requirements of the plurality of delivery points except the saturated delivery point is greater than the delivery capacity of the robot; and grouping, if the sum is greater than the delivery capacity of the robot, the plurality of delivery points into the at least one delivery point group according to the new delivery requirement of the saturated delivery point, the delivery requirements of the plurality of delivery points except the saturated delivery point, and the delivery capacity of the robot.

Through the method, it is determined that a total delivery requirement corresponding to each delivery point group is less than or equal to the delivery capacity of the robot, and internal delivery to the entire delivery point group can be completed by one robot, to reduce interlace operations of robots, thereby improving delivery efficiency.

Optionally, the method further includes: determining the plurality of delivery points as one delivery point group if the sum is less than or equal to the delivery capacity of the robot.

Through the method, internal delivery to the determined entire delivery point group can be completed by one robot, to reduce interlace operations of robots, thereby improving delivery efficiency.

S305: determining a target delivery route corresponding to one delivery point group in the at least one delivery point group.

S306: controlling, according to the target delivery route, a first robot to deliver goods corresponding to the one delivery point group in the delivery task to the delivery points in the one delivery point group.

S305 and S306 have the same technical features as S203 and S204. For detailed descriptions, refer to S203 and S204. Details are not described herein again.

According to the goods delivery method provided in the present disclosure, based on the foregoing embodiments, it is determined whether a saturated delivery point exists in a plurality of delivery points, where a delivery requirement of the saturated delivery point is greater than a delivery capacity of a robot; if the saturated delivery point exists, a difference between the delivery requirement of the saturated delivery point and the delivery capacity of the robot is determined as a new delivery requirement of the saturated delivery point; and the plurality of delivery points is grouped into at least one delivery point group according to the new delivery requirement of the saturated delivery point, delivery requirements of the plurality of delivery points except the saturated delivery point, and the delivery capacity of the robot. In this way, different grouping methods are performed on delivery points with different magnitudes of delivery requirements, so that a grouping case is reasonable.

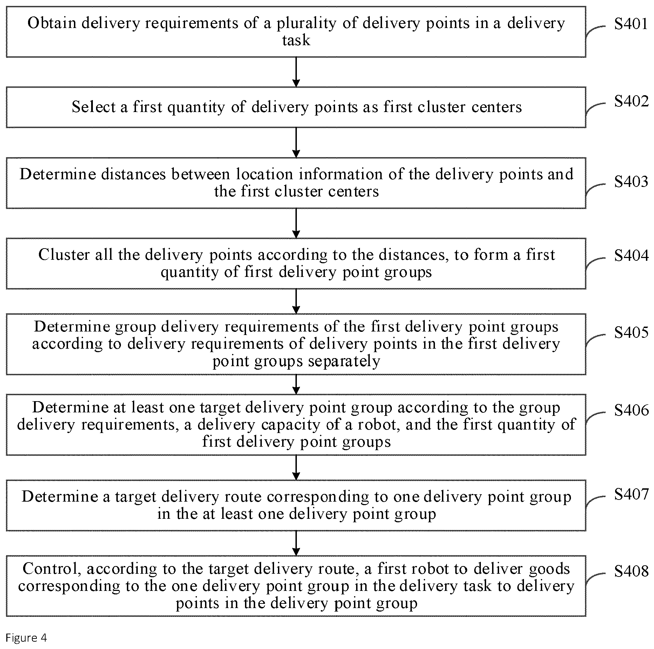

FIG. 4 is a schematic flowchart of another goods delivery method according to the present disclosure. The method is applied to a control terminal. How to group a plurality of delivery points into at least one delivery point group according to delivery requirements of the delivery points and a delivery capacity of a robot is further described in FIG. 4. The embodiment shown in FIG. 4 may be combined with any of the foregoing method embodiments, and is shown based on FIG. 2 to save space. As shown in FIG. 4, the method includes:
S401: obtaining the delivery requirements of the plurality of delivery points in a delivery task.
S401 has the same technical features as S201. For a detailed description, refer to S201. Details are not described herein again.

Optionally, before S402, the method further includes: determining a total delivery requirement of all the delivery points according to the delivery requirements of the delivery points; and determining the first quantity according to a ratio of the total delivery requirement to the delivery capacity of the robot.

The first quantity is an integer greater than or equal to the ratio.

Through the method, the reasonable grouping quantity can be determined, and the quantity of times of iteration of a grouping process can be reduced, thereby optimizing the grouping process, and improving grouping efficiency.

S402: selecting a first quantity of delivery points as first cluster centers.

Optionally, the first quantity of delivery points are randomly selected as the first cluster centers. Alternatively, the first quantity of delivery points may be selected according to a preset principle, for example, the first quantity of delivery points are selected according to the principle that the first cluster centers are dispersed as much as possible.

The first quantity may be calculated according to delivery requirements and the delivery capacity of the robot, or may be a randomly set positive integer.

The first cluster centers are initial cluster centers of a K-means clustering algorithm.

S403: determining distances between location information of the delivery points and the first cluster centers.

Specifically, Euclidean distances between the location information of the delivery points and the first cluster centers are determined.

S404: clustering all the delivery points according to the distances, to form a first quantity of first delivery point groups.

Specifically, all the delivery points are clustered by using the K-means clustering algorithm according to the distances.

S402 to S404 are described in detail below by using an example.

First, K delivery points are selected as initial cluster centers of the K-means clustering algorithm. For example, the first quantity of delivery points are selected according to the principle that the first cluster centers are dispersed as much as possible. To be specific, first, one point is randomly selected as a first cluster center µ₁ from an input delivery point location information set; a distance between each delivery point xᵢ and the selected cluster center is calculated, that is, D(xᵢ)=argmin∥x_{I}-µ₁∥; and a new delivery point is then selected as a new cluster center, where the principle of selection is as follows: a point with a greater distance from the selected cluster center, that is, a point with greater D (x), has a higher probability of being selected as a cluster center. The steps are repeated until the K cluster centers are selected. Then, the cluster centers are updated through iteration until the quantity of times of iteration reaches a preset threshold; and in this case, the iteration is exited, and a clustering result is used as a final clustering and grouping result. Alternatively, the cluster centers may be updated through iteration until a clustering and grouping effect is not improved; and in this case, the iteration is exited, and a clustering result is used as a final clustering and grouping result. Alternatively, the cluster centers may be updated through iteration until iteration duration reaches preset duration; and in this case, the iteration is exited, and a clustering result is used as a final clustering and grouping result.

S405: determining group delivery requirements of the first delivery point groups according to delivery requirements of delivery points in the first delivery point groups separately.

Specifically, a sum of delivery requirements corresponding to delivery points in each of the first delivery point groups is determined as a group delivery requirement of each of the first delivery point groups.

S406: determining at least one delivery point group according to the group delivery requirements, the delivery capacity of the robot, and the first quantity of first delivery point groups.

In a possible implementation, the determining the at least one delivery point group according to the group delivery requirements, the delivery capacity of the robot, and the first quantity of first delivery point groups includes: comparing the group delivery requirements separately with the delivery capacity of the robot; and if all the group delivery requirements are less than or equal to the delivery capacity of the robot, determining the first quantity of first delivery point groups as the at least one delivery point group.

In the method, a delivery point group with a group delivery requirement less than or equal to the delivery capacity of the robot can be allocated to one robot to complete. Since delivery points in the delivery point group are concentrated, delivery efficiency can be effectively improved through the method.

In another possible implementation, the determining the at least one delivery point group according to the group delivery requirements, the delivery capacity of the robot, and the first quantity of first delivery point groups includes: comparing the group delivery requirements separately with the delivery capacity of the robot; and if at least one group delivery requirement is greater than the delivery capacity of the robot, selecting a second quantity of delivery points as second cluster centers, re-clustering all the delivery points to obtain a second quantity of second delivery point groups, and determining the second quantity of second delivery point groups as the at least one delivery point group.

The second quantity is greater than the first quantity.

Through the method, when delivery point groups with corresponding group delivery requirements greater than the delivery capacity of the robot exist in delivery point groups obtained through clustering, clustering and grouping can be re-performed on the delivery point groups, so that a group delivery requirement corresponding to each of delivery point groups obtained through grouping can be completed by one robot. In this way, interlace operations of robots can be avoided, thereby improving delivery efficiency of the robots. In the method, clustering and grouping are re-performed on all the delivery points, so that a grouping case can be fully optimized, thereby improving grouping quality.

In still another possible implementation, the determining the at least one delivery point group according to the group delivery requirements, the delivery capacity of the robot, and the first quantity of first delivery point groups includes: comparing the group delivery requirements separately with the delivery capacity of the robot; and if at least one group delivery requirement is greater than the delivery capacity of the robot, using the delivery point group with a group delivery requirement greater than the delivery capacity of the robot in the first delivery point groups as a third delivery point group, and re-clustering delivery points in the third delivery point group according to location information and delivery requirements of the delivery points in the third delivery point group and the delivery capacity of the robot, to form at least one fourth delivery point group; and determining the fourth delivery point group and the first delivery point groups except the third delivery point group as the at least one delivery point group.

Through the method, when delivery point groups with corresponding group delivery requirements greater than the delivery capacity of the robot exist in delivery point groups obtained through clustering, clustering and grouping can be re-performed on delivery points included in the delivery point groups with group delivery requirements greater than the delivery capacity of the robot, so that a group delivery requirement corresponding to each of finally obtained delivery point groups can be less than or equal to the delivery capacity of the robot, to be completed by one robot. In this way, interlace operations of robots can be avoided, thereby improving delivery efficiency of the robots. In the method, clustering and grouping are re-performed on only delivery points in a delivery point group with a group delivery requirement greater than the delivery capacity of the robot, so that the amount of calculation data can be reduced, thereby improving clustering and grouping efficiency.

S407: determining a target delivery route corresponding to one delivery point group in the at least one delivery point group.

S408: controlling, according to the target delivery route, a first robot to deliver goods corresponding to the one delivery point group in the delivery task to the delivery points in the delivery point group.

S407 and S408 have the same technical features as S203 and S204. For detailed descriptions, refer to S203 and S204. Details are not described herein again.

Optionally, the method further includes:
in the process of controlling, according to the target delivery route, the first robot to deliver the goods corresponding to the delivery task to the delivery points in the delivery point group, determining a second delivery route according to location information of a first delivery point to which delivery has not been completed in the delivery point group and current location information of the first robot; and controlling, according to the second delivery route, the first robot to deliver goods corresponding to the delivery task to the first delivery point to which delivery has not been completed in the delivery point group.

Through the method, during delivery by the robot, a delivery route of the robot can be continuously optimized and updated according to a current location of the robot and location information of a delivery point to which the robot does not complete delivery, thereby further improving delivery efficiency.

Optionally, the method further includes:
in the process of controlling, according to the target delivery route, the first robot to deliver the goods corresponding to the delivery task to the delivery points in the delivery point group, determining and storing a second delivery route according to location information of a first delivery point to which delivery has not been completed in the delivery point group and current location information of the first robot.

The second delivery route is used for controlling the first robot to deliver the goods corresponding to the delivery task to the delivery points in the delivery point group according to the second delivery route when the robot needs to complete the same delivery task next time.

Through the method, when the robot needs the task same as the current task next time, the robot can obtain an optimal delivery route without performing a responsible calculation process, so that the calculation process can be reduced, thereby effectively improving delivery efficiency.

In the goods delivery method provided in the present disclosure, based on the foregoing embodiments, further, the first quantity of delivery points are selected as first cluster centers; distances between location information of the delivery points and the first cluster centers are determined; all the delivery points are clustered according to the distances, to form a first quantity of first delivery point groups; group delivery requirements of the first delivery point groups are determined according to delivery requirements of delivery points in the first delivery point groups separately; and at least one delivery point group is determined according to the group delivery requirements, a delivery capacity of a robot, and the first quantity of first delivery point groups. In this way, clustering and grouping can be performed on delivery points, and it can be ensured that delivery requirements match the delivery capacity of the robot. In this way, a group delivery requirement corresponding to one delivery point group can be completed by as few robots as possible, thereby avoiding interlace operations of robots, reducing the difficulty of controlling the robots, and improving utilization of the robots. Further, Through the method, delivery points included in each delivery point group can be concentrated as much as possible, thereby reducing an operation range of a robot, improving operation efficiency of the robot, and improving delivery efficiency.

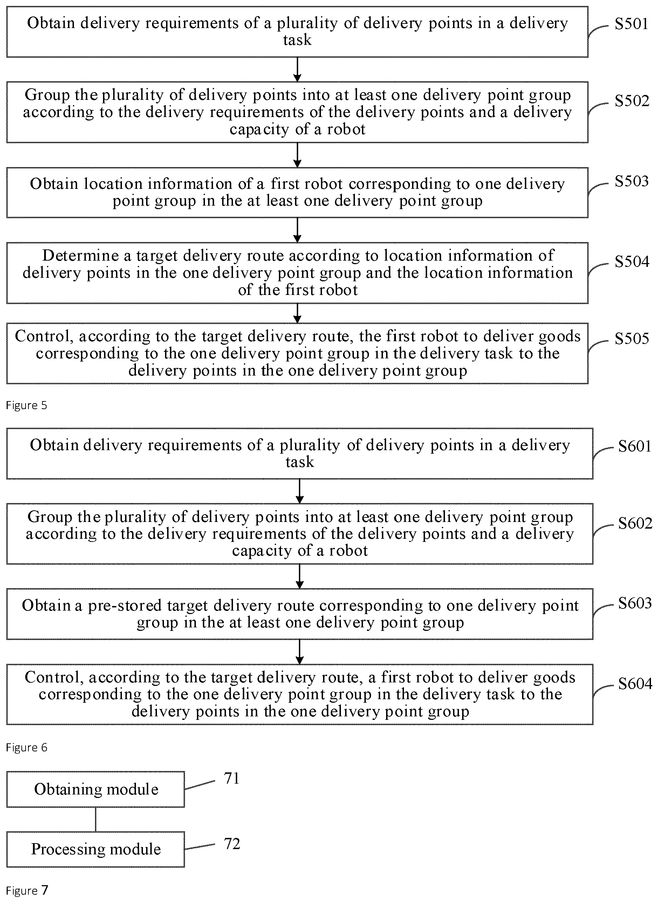

FIG. 5 is a schematic flowchart of still another goods delivery method according to the present disclosure. The method is applied to a control terminal. How to determine a target delivery route corresponding to a delivery point group is further described in FIG. 5 based on any of the foregoing method embodiments, and is described herein in detail based on FIG. 2. As shown in FIG. 5, the method includes:
S501: obtaining delivery requirements of a plurality of delivery points in a delivery task.
S502: grouping the plurality of delivery points into at least one delivery point group according to the delivery requirements of the delivery points and a delivery capacity of a robot.
S501 and S502 have the same technical features as S201 and S202. For detailed descriptions, refer to S201 and S202. Details are not described herein again.
S503: obtaining location information of a first robot corresponding to one delivery point group in the at least one delivery point group.

Specifically, the first robot is configured to complete a delivery task corresponding to the delivery point group.

For example, the location information of the first robot may be obtained from another device, such as a dispatching system; or the location information of the first robot may be obtained according to interaction with the first robot and location information reported by the robot.

S504: determining a target delivery route according to location information of delivery points in the one delivery point group and the location information of the first robot.

For example, the target delivery route may be determined according to the principle of nearest delivery and distances between the location information of the delivery points and the location information of the first robot. The target delivery route may alternatively be determined by using a heuristic algorithm.

In a possible implementation, the determining the target delivery route according to the location information of the delivery points and the location information of the first robot includes: determining a distance matrix corresponding to the delivery point group, where the distance matrix includes distances between locations of the delivery points in the delivery point group and the location information of the first robot; randomly generating an initial route corresponding to the delivery point group according to the distance matrix; performing iteration on the initial route according to the distance matrix, and stopping the iteration when a preset condition is met, where the preset condition includes at least one of the following: iteration duration reaches preset duration, the quantity of times of iteration reaches the preset quantity of times, or optimization degrees of M consecutive iteration results starting from an N^{th} time of iteration are less than or equal to a preset threshold, where both N and M are positive integers; and determining the target delivery route according to an iteration result.

Through the method, a reasonable delivery route can be determined at a fast speed, and a processing process is shortened, thereby further improving delivery efficiency of the robot.

S505: controlling, according to the target delivery route, the first robot to deliver goods corresponding to the one delivery point group in the delivery task to the delivery points in the one delivery point group.

S505 has the same technical features as S204. For a detailed description, refer to S204. Details are not described herein again.

In the goods delivery method provided in the present disclosure, based on any of the foregoing method embodiments, further, location information of a first robot corresponding to one delivery point in at least one delivery point group is obtained, and a target delivery route is determined according to location information of delivery points in the one delivery point group and the location information of the first robot. In this way, a delivery route can be determined combined with the location information of the robot and location information of delivery points, thereby ensuring rationality of the delivery route, and improving delivery efficiency of the robot.

FIG. 6 is a schematic flowchart of yet another goods delivery method according to the present disclosure. The method is applied to a control terminal. How to determine a target delivery route corresponding to a delivery point group is further described in FIG. 6 based on embodiments shown in FIG. 2 to FIG. 4, and is described herein in detail based on FIG. 2. As shown in FIG. 6, the method includes:
S601: obtaining delivery requirements of a plurality of delivery points in a delivery task.
S602: grouping the plurality of delivery points into at least one delivery point group according to the delivery requirements of the delivery points and a delivery capacity of a robot.
S601 and S602 have the same technical features as S201 and S202. For detailed descriptions, refer to S201 and S202. Details are not described herein again.
S603: obtaining a pre-stored target delivery route corresponding to one delivery point group in the at least one delivery point group.

For example, the pre-stored target delivery route corresponding to the delivery point group is obtained from an entity or a virtual storage medium, or the pre-stored target delivery route corresponding to the delivery point group is obtained through communication with another device.

Optionally, the delivery point group includes P delivery points, and before the obtaining the pre-stored target delivery route corresponding to the delivery point group, the method further includes: determining a first delivery route according to location information of delivery points in the delivery point group and location information of a first robot; controlling, according to the first delivery route, the first robot to deliver goods corresponding to the delivery task to a Q^{th} delivery point in the delivery point group; and determining and storing the target delivery route according to location information of P-Q delivery points to which delivery has not been completed in the delivery point group and start location information of the first robot.

The Q^{th} delivery point is a corresponding Q^{th} delivery point in a delivery sequence of the first delivery route.

For example, the delivery point group includes ten delivery points. After the first robot is controlled to complete delivery to a first delivery point according to the first delivery route, delivery has not been completed to remaining nine delivery points in the delivery point group. In this case, a sub-delivery route covering the remaining nine delivery points to which delivery has not been completed is determined according to current location information of the first robot and location information of the remaining nine delivery points to which delivery has not been completed, and a route obtained by combining an actual delivery route of the first robot from a start location to the first delivery point and the sub-delivery route is determined as the target delivery route.

It should be noted that, within an allowed error range, after the first robot completes delivery to the first delivery point, the current location of the first robot may be a location of the first delivery point. Certainly, after the first robot completes delivery to the first delivery point, the current location of the first robot may also be an actual location of the first robot.

Optionally, a corresponding route covering the remaining nine delivery points to which delivery has not been completed in the first delivery route may also be compared with the determined sub-delivery route; if the sub-delivery route is optimal, the route obtained by combining the actual delivery route from the start location of the first robot to the first delivery point and the sub-delivery route is determined as the target delivery route; and if the corresponding route covering the remaining nine delivery points to which delivery has not been completed in the first delivery route is optimal, the first delivery route is determined as the target delivery route. Specifically, it may be determined whether a route is good or poor according to rules such as a route length and delivery duration.

Through the method, a more reasonable delivery route can be pre-determined combined with an actual previously performed delivery process, thereby further optimizing the delivery process, and improving delivery efficiency.

S604: controlling, according to the target delivery route, the first robot to deliver goods corresponding to the one delivery point group in the delivery task to the delivery points in the one delivery point group.

S604 has the same technical features as S204. For a detailed description, refer to S204. Details are not described herein again.

In the goods delivery method provided in the present disclosure, based on the foregoing method embodiments, further, a pre-stored target delivery route corresponding to one delivery point group in at least one delivery point group is obtained, so that a processing process can be simplified, and a response speed of a delivery task can be improved, thereby improving delivery efficiency.

It should be noted that, the foregoing method embodiments may be combined with each other, and a combination form thereof also falls within the scope of the present disclosure.

FIG. 7 is a schematic structural diagram of a goods delivery apparatus according to the present disclosure. As shown in FIG. 7, the apparatus includes:
an obtaining module 71, configured to obtain delivery requirements of a plurality of delivery points in a delivery task; and
a processing module 72, configured to group the plurality of delivery points into at least one delivery point group according to the delivery requirements of the delivery points and a delivery capacity of a robot, where
the processing module 72 is further configured to determine a target delivery route corresponding to one delivery point group in the at least one delivery point group; and
the processing module 72 is further configured to control, according to the target delivery route, a first robot to deliver goods corresponding to the one delivery point group in the delivery task to the delivery points in the one delivery point group.

Optionally, the processing module 72 is further configured to determine whether a saturated delivery point exists in the plurality of delivery points, where a delivery requirement of the saturated delivery point is greater than the delivery capacity of the robot; determine, if the saturated delivery point exists, a difference between the delivery requirement of the saturated delivery point and the delivery capacity of the robot as a new delivery requirement of the saturated delivery point; and group the plurality of delivery points into at least one delivery point group according to the new delivery requirement of the saturated delivery point, delivery requirements of the plurality of delivery points except the saturated delivery point, and the delivery capacity of the robot.

Optionally, the processing module 72 is further configured to determine whether a sum of the new delivery requirement of the saturated delivery point and the delivery requirements of the plurality of delivery points except the saturated delivery point is greater than the delivery capacity of the robot; and group, if the sum is greater than the delivery capacity of the robot, the plurality of delivery points into the at least one delivery point group according to the new delivery requirement of the saturated delivery point, the delivery requirements of the plurality of delivery points except the saturated delivery point, and the delivery capacity of the robot.

Optionally, the processing module 72 is further configured to determine the plurality of delivery points as one delivery point group if the sum is less than or equal to the delivery capacity of the robot.

Optionally, the processing module 72 is further configured to obtain location information of the delivery points; select a first quantity of delivery points as first cluster centers; determine distances between location information of the delivery points and the first cluster centers; cluster all the delivery points according to the distances, to form a first quantity of first delivery point groups; determine group delivery requirements of the first delivery point groups according to delivery requirements of delivery points in the first delivery point groups separately; and determine the at least one delivery point group according to the group delivery requirements, the delivery capacity of the robot, and the first quantity of first delivery point groups.

Optionally, the processing module 72 is further configured to compare the group delivery requirements separately with the delivery capacity of the robot; and if all the group delivery requirements are less than or equal to the delivery capacity of the robot, determine the first quantity of first delivery point groups as the at least one delivery point group.

Optionally, the processing module 72 is further configured to compare the group delivery requirements separately with the delivery capacity of the robot; and if at least one group delivery requirement is greater than the delivery capacity of the robot, select a second quantity of delivery points as second cluster centers, re-cluster all the delivery points to obtain a second quantity of second delivery point groups, and determine the second quantity of second delivery point groups as the at least one delivery point group, where the second quantity is greater than the first quantity.

Optionally, the processing module 72 is further configured to compare the group delivery requirements separately with the delivery capacity of the robot; and if at least one group delivery requirement is greater than the delivery capacity of the robot, use the delivery point group with a group delivery requirement greater than the delivery capacity of the robot in the first delivery point groups as a third delivery point group, and re-cluster delivery points in the third delivery point group according to location information and delivery requirements of the delivery points in the third delivery point group and the delivery capacity of the robot, to form at least one fourth delivery point group; and determine the fourth delivery point group and the first delivery point groups except the third delivery point group as the at least one delivery point group.

Optionally, before the selecting the first quantity of delivery points as the first cluster centers, the processing module 72 is further configured to determine a total delivery requirement of all the delivery points according to the delivery requirements of the delivery points; and determine the first quantity according to a ratio of the total delivery requirement to the delivery capacity of the robot, where the first quantity is an integer greater than or equal to the ratio.

Optionally, the processing module 72 is further configured to obtain location information of the first robot corresponding to the one delivery point group in the at least one delivery point group; and determine the target delivery route according to location information of the delivery points in the one delivery point group and the location information of the first robot.

Optionally, the processing module 72 is further configured to determine a distance matrix corresponding to the one delivery point group, where the distance matrix includes distances between locations of the delivery points in the one delivery point group and the location information of the first robot; randomly generate an initial route corresponding to the delivery point group according to the distance matrix; perform iteration on the initial route according to the distance matrix, and stop the iteration when a preset condition is met; and determine the target delivery route according to an iteration result.

Optionally, the processing module 72 is further configured to obtain the pre-stored target delivery route corresponding to the one delivery point group in the at least one delivery point group.

Optionally, the delivery point group includes P delivery points; and before the obtaining the pre-stored target delivery route corresponding to the one delivery point group in the at least one delivery point group, the processing module 72 is further configured to determine a first delivery route according to location information of the delivery points in the one delivery point group in the at least one delivery point group and location information of the first robot; control, according to the first delivery route, the first robot to deliver goods corresponding to the delivery task to a Q^{th} delivery point in the delivery point group; and determine and store the target delivery route according to location information of P-Q delivery points to which delivery has not been completed in the delivery point group and start location information of the first robot.

Optionally, the processing module 72 is further configured to: in the process of controlling, according to the target delivery route, the first robot to deliver the goods corresponding to the delivery task to the delivery points in the delivery point group, determine a second delivery route according to location information of a first delivery point to which delivery has not been completed in the delivery point group and current location information of the first robot; and control, according to the second delivery route, the first robot to deliver goods corresponding to the delivery task to the first delivery point to which delivery has not been completed in the delivery point group.

Optionally, the processing module 72 is further configured to determine the first robot from a plurality of robots according to location information of the delivery points in the delivery point group and location information of the plurality of robots, where a distance between the first robot and the delivery point group is less than or equal to a preset value.

Optionally, goods corresponding to the delivery task are located on a conveyor; and the processing module 72 is further configured to determine a delivery sequence of the delivery points in the delivery point group according to the target delivery route; determine a goods delivery sequence of goods according to the goods required by the delivery points and the delivery sequence; and control a second robot to sequentially transfer the goods to the conveyor according to the goods delivery sequence, and control the first robot to retrieve the goods from the conveyor.

Optionally, goods corresponding to the delivery task are located on a buffer shelving unit; and the processing module 72 is further configured to determine the goods corresponding to the delivery point group according to the delivery task; and control the first robot to retrieve the goods from the buffer shelving unit.

The goods delivery apparatus may perform the foregoing goods delivery method. For content and effects thereof, refer to the method embodiments. Details are not described herein again.

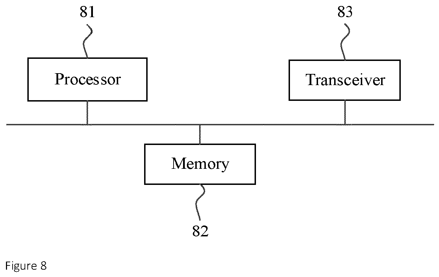

FIG. 8 is a schematic structural diagram of an electronic device according to the present disclosure. As shown in FIG. 8, the electronic device in this embodiment includes a processor 81 and a memory 82, where the processor 81 is communicatively connected to the memory 82, the memory 82 is configured to store a computer program, and the processor 81 is configured to execute the computer program stored in the memory 82, to implement the method according to the foregoing embodiments.

Optionally, the electronic device further includes a transceiver 83, configured to communicate with another device.

The electronic device may perform the foregoing goods delivery method. For content and effects thereof, refer to the method embodiments. Details are not described herein again.

The present disclosure further provides a computer-readable storage medium, storing computer-executable instructions, where when executed by a processor, the computer-executable instructions are configured to implement the method according to any of the foregoing method embodiments.

When the computer-executed instructions stored in the computer-readable storage medium are executed by the processor, the foregoing goods delivery method can be implemented. For content and effects thereof, refer to the method embodiments. Details are not described herein again.

The present disclosure further provides a computer program product, including computer programs/instructions, where the computer programs/instructions, when executed by a processor, implement the method according to any of the foregoing method embodiments.

When the computer-executed instructions stored in the computer-readable storage medium are executed by the processor, the foregoing goods delivery method can be implemented. For content and effects thereof, refer to the method embodiments. Details are not described herein again.

Finally, it should be noted that, the foregoing embodiments are merely used for describing the technical solutions of the present disclosure, but are not intended to limit the present disclosure. It should be understood by a person of ordinary skill in the art that although the present disclosure has been described in detail with reference to the foregoing embodiments, modifications can be made to the technical solutions described in the foregoing embodiments, or equivalent replacements can be made to some or all of the technical features, without departing from the scope of the technical solutions of embodiments of the present disclosure.

## Claims

1. A goods delivery method, comprising:
obtaining (S201, S301, S401, S501, S601) delivery requirements of a plurality of delivery points in a delivery task;
grouping (S202) the plurality of delivery points into at least one delivery point group according to the delivery requirements of the delivery points and a delivery capacity of a robot;
determining (S203) a target delivery route corresponding to one delivery point group in the at least one delivery point group; and
controlling (S204), according to the target delivery route, a first robot to deliver goods corresponding to the one delivery point group in the delivery task to the delivery points in the one delivery point group;
wherein the grouping (S202) the plurality of delivery points into the at least one delivery point group according to the delivery requirements of the delivery points and the delivery capacity of the robot comprises:
determining (S302) whether a saturated delivery point exists in the plurality of delivery points, wherein a delivery requirement of the saturated delivery point is greater than the delivery capacity of the robot;
determining (S303), if the saturated delivery point exists, a difference between the delivery requirement of the saturated delivery point and the delivery capacity of the robot as a new delivery requirement of the saturated delivery point; and
grouping (S304) the plurality of delivery points into the at least one delivery point group according to the new delivery requirement of the saturated delivery point, delivery requirements of the plurality of delivery points except the saturated delivery point, and the delivery capacity of the robot.

2. The method according to claim 1, wherein the grouping (S304) the plurality of delivery points into the at least one delivery point group according to the new delivery requirement of the saturated delivery point, the delivery requirements of the plurality of delivery points except the saturated delivery point, and the delivery capacity of the robot comprises:
determining whether a sum of the new delivery requirement of the saturated delivery point and the delivery requirements of the plurality of delivery points except the saturated delivery point is greater than the delivery capacity of the robot; and
grouping, if the sum is greater than the delivery capacity of the robot, the plurality of delivery points into the at least one delivery point group according to the new delivery requirement of the saturated delivery point, the delivery requirements of the plurality of delivery points except the saturated delivery point, and the delivery capacity of the robot.

3. The method according to claim 2, wherein the method further comprises:
determining the plurality of delivery points as one delivery point group if the sum is less than or equal to the delivery capacity of the robot.

4. The method according to claim 1 or 2, wherein the grouping (S202) the plurality of delivery points into the at least one delivery point group according to the delivery requirements of the delivery points and the delivery capacity of the robot comprises:
obtaining location information of the delivery points;
selecting (S402) a first quantity of delivery points as first cluster centers;
determining (S403) distances between the location information of the delivery points and the first cluster centers;
clustering (S404) all the delivery points according to the distances, to form a first quantity of first delivery point groups;
determining (S405) group delivery requirements of the first delivery point groups according to delivery requirements of delivery points in the first delivery point groups separately; and
determining (S406) the at least one delivery point group according to the group delivery requirements, the delivery capacity of the robot, and the first quantity of first delivery point groups.

5. The method according to claim 4, wherein the determining (S406) the at least one delivery point group according to the group delivery requirements, the delivery capacity of the robot, and the first quantity of first delivery point groups comprises:
comparing the group delivery requirements separately with the delivery capacity of the robot; and if all the group delivery requirements are less than or equal to the delivery capacity of the robot, determining the first quantity of first delivery point groups as the at least one delivery point group.

6. The method according to claim 4, wherein the determining (S406) the at least one delivery point group according to the group delivery requirements, the delivery capacity of the robot, and the first quantity of first delivery point groups comprises:
comparing the group delivery requirements separately with the delivery capacity of the robot; and if at least one group delivery requirement is greater than the delivery capacity of the robot, selecting a second quantity of delivery points as second cluster centers, re-clustering all the delivery points to obtain a second quantity of second delivery point groups, and determining the second quantity of second delivery point groups as the at least one delivery point group, wherein the second quantity is greater than the first quantity.

7. The method according to claim 4, wherein the determining (S406) the at least one delivery point group according to the group delivery requirements, the delivery capacity of the robot, and the first quantity of first delivery point groups comprises:
comparing the group delivery requirements separately with the delivery capacity of the robot; and if at least one group delivery requirement is greater than the delivery capacity of the robot, using the delivery point group with a group delivery requirement greater than the delivery capacity of the robot in the first delivery point groups as a third delivery point group, and re-clustering delivery points in the third delivery point group according to location information and delivery requirements of the delivery points in the third delivery point group and the delivery capacity of the robot, to form at least one fourth delivery point group; and
determining the fourth delivery point group and the first delivery point groups except the third delivery point group as the at least one delivery point group.

8. The method according to claim 4, wherein before the selecting (S402) the first quantity of delivery points as the first cluster centers, the method further comprises:
determining a total delivery requirement of all the delivery points according to the delivery requirements of the delivery points; and
determining the first quantity according to a ratio of the total delivery requirement to the delivery capacity of the robot, wherein the first quantity is an integer greater than or equal to the ratio.

9. The method according to claim 1 or 2, wherein the determining (S203) the target delivery route corresponding to the one delivery point group in the at least one delivery point group comprises:
obtaining (S503) location information of the first robot corresponding to the one delivery point group in the at least one delivery point group; and
determining (S504) the target delivery route according to location information of the delivery points in the one delivery point group and the location information of the first robot.

10. The method according to claim 9, wherein the determining (S504) the target delivery route according to the location information of the delivery points in the one delivery point group and the location information of the first robot comprises:
determining a distance matrix corresponding to the one delivery point group, wherein the distance matrix comprises distances between locations of the delivery points in the one delivery point group and the location information of the first robot;
randomly generating an initial route corresponding to the delivery point group according to the distance matrix;
performing iteration on the initial route according to the distance matrix, and stopping the iteration when a preset condition is met; and
determining the target delivery route according to an iteration result.

11. The method according to claim 1 or 2, wherein the determining (S203) the target delivery route corresponding to the one delivery point group in the at least one delivery point group comprises:
obtaining (S603) the pre-stored target delivery route corresponding to the one delivery point group in the at least one delivery point group.

12. The method according to claim 11, wherein the delivery point group comprises P delivery points; and before the obtaining (S603) the pre-stored target delivery route corresponding to the one delivery point group in the at least one delivery point group, the method further comprises:
determining a first delivery route according to location information of the delivery points in the one delivery point group in the at least one delivery point group and location information of the first robot;
controlling, according to the first delivery route, the first robot to deliver goods corresponding to the delivery task to a Q^{th} delivery point in the delivery point group; and
determining and storing the target delivery route according to location information of P-Q delivery points to which delivery has not been completed in the delivery point group and start location information of the first robot.

13. The method according to claim 1 or 2, wherein goods corresponding to the delivery task are located on a buffer shelving unit; and before the controlling (S204), according to the target delivery route, the first robot to deliver the goods corresponding to the delivery task to the delivery points in the delivery point group, the method further comprises:
determining the goods corresponding to the delivery point group according to the delivery task; and
controlling the first robot to retrieve the goods from the buffer shelving unit.

14. A server, comprising:
at least one processor; and
a memory communicatively connected to the at least one processor, wherein
the memory stores instructions executable by the at least one processor, and the instructions are executed by the at least one processor to cause the at least one processor to perform the method according to any one of claims 1 to 13.

## Patentansprüche

1. Verfahren zur Warenlieferung, umfassend:
Erhalten (S201, S301, S401, S501, S601) von Lieferanforderungen einer Vielzahl von Lieferstellen in einem Lieferauftrag;
Gruppieren (S202) der Vielzahl von Lieferstellen zu mindestens einer Lieferstellengruppe gemäß den Lieferanforderungen der Lieferstellen und einer Lieferkapazität eines Roboters;
Bestimmen (S203) einer Ziellieferroute entsprechend einer Lieferstellengruppe in der mindestens einen Lieferstellengruppe; und
Steuern (S204) eines ersten Roboters gemäß der Ziellieferroute, um Waren, die der einen Lieferstellengruppe in dem Lieferauftrag entsprechen, an die Lieferstellen in der einen Lieferstellengruppe zu liefern;
wobei das Gruppieren (S202) der Vielzahl von Lieferstellen zu der mindestens einen Lieferstellengruppe gemäß den Lieferanforderungen der Lieferstellen und der Lieferkapazität des Roboters umfasst:
Bestimmen (S302), ob eine gesättigte Lieferstelle unter der Vielzahl von Lieferstellen vorhanden ist, wobei eine Lieferanforderung der gesättigten Lieferstelle größer als die Lieferkapazität des Roboters ist;
Bestimmen (S303), falls die gesättigte Lieferstelle vorhanden ist, einer Differenz zwischen der Lieferanforderung der gesättigten Lieferstelle und der Lieferkapazität des Roboters als eine neue Lieferanforderung der gesättigten Lieferstelle; und
Gruppieren (S304) der Vielzahl von Lieferstellen zu der mindestens einen Lieferstellengruppe gemäß der neuen Lieferanforderung der gesättigten Lieferstelle, Lieferanforderungen der Vielzahl von Lieferstellen mit Ausnahme der gesättigten Lieferstelle und der Lieferkapazität des Roboters.

2. Verfahren nach Anspruch 1, wobei das Gruppieren (S304) der Vielzahl von Lieferstellen zu der mindestens einen Lieferstellengruppe gemäß der neuen Lieferanforderung der gesättigten Lieferstelle, den Lieferanforderungen der Vielzahl von Lieferstellen mit Ausnahme der gesättigten Lieferstelle und der Lieferkapazität des Roboters umfasst:
Bestimmen, ob eine Summe aus der neuen Lieferanforderung der gesättigten Lieferstelle und den Lieferanforderungen der Vielzahl von Lieferstellen mit Ausnahme der gesättigten Lieferstelle größer als die Lieferkapazität des Roboters ist; und
Gruppieren, falls die Summe größer als die Lieferkapazität des Roboters ist, der Vielzahl von Lieferstellen zu der mindestens einen Lieferstellengruppe gemäß der neuen Lieferanforderung der gesättigten Lieferstelle, den Lieferanforderungen der Vielzahl von Lieferstellen mit Ausnahme der gesättigten Lieferstelle und der Lieferkapazität des Roboters.

3. Verfahren nach Anspruch 2, wobei das Verfahren ferner umfasst:
Bestimmen der Vielzahl von Lieferstellen als eine Lieferstellengruppe, falls die Summe kleiner oder gleich der Lieferkapazität des Roboters ist.

4. Verfahren nach Anspruch 1 oder 2, wobei das Gruppieren (S202) der Vielzahl von Lieferstellen zu der mindestens einen Lieferstellengruppe gemäß den Lieferanforderungen der Lieferstellen und der Lieferkapazität des Roboters umfasst:
Erhalten von Positionsinformationen der Lieferstellen;
Auswählen (S402) einer ersten Anzahl von Lieferstellen als erste Clustermittelpunkte;
Bestimmen (S403) von Abständen zwischen den Positionsinformationen der Lieferstellen und den ersten Clustermittelpunkten;
Clustern (S404) aller den Lieferstellen gemäß den Abständen, um eine erste Anzahl von ersten Lieferstellengruppen zu bilden;
Bestimmen (S405) von Gruppenlieferanforderungen der ersten Lieferstellengruppen jeweils gemäß Lieferanforderungen von Lieferstellen in den ersten Lieferstellengruppen; und
Bestimmen (S406) der mindestens einen Lieferstellengruppe gemäß den Gruppenlieferanforderungen, der Lieferkapazität des Roboters und der ersten Anzahl von ersten Lieferstellengruppen.

5. Verfahren nach Anspruch 4, wobei das Bestimmen (S406) der mindestens einen Lieferstellengruppe gemäß den Gruppenlieferanforderungen, der Lieferkapazität des Roboters und der ersten Anzahl von ersten Lieferstellengruppen umfasst:
Vergleichen der Gruppenlieferanforderungen jeweils mit der Lieferkapazität des Roboters; und falls alle Gruppenlieferanforderungen kleiner oder gleich der Lieferkapazität des Roboters sind, Bestimmen der ersten Anzahl von ersten Lieferstellengruppen als die mindestens eine Lieferstellengruppe.

6. Verfahren nach Anspruch 4, wobei das Bestimmen (S406) der mindestens einen Lieferstellengruppe gemäß den Gruppenlieferanforderungen, der Lieferkapazität des Roboters und der ersten Anzahl von ersten Lieferstellengruppen umfasst:
Vergleichen der Gruppenlieferanforderungen jeweils mit der Lieferkapazität des Roboters; und falls mindestens eine Gruppenlieferanforderung größer als die Lieferkapazität des Roboters ist, Auswählen einer zweiten Anzahl von Lieferstellen als zweite Clustermittelpunkte, erneutes Clustern aller den Lieferstellen, um eine zweite Anzahl von zweiten Lieferstellengruppen zu erhalten, und Bestimmen der zweiten Anzahl von zweiten Lieferstellengruppen als die mindestens eine Lieferstellengruppe, wobei die zweite Anzahl größer als die erste Anzahl ist.

7. Verfahren nach Anspruch 4, wobei das Bestimmen (S406) der mindestens einen Lieferstellengruppe gemäß den Gruppenlieferanforderungen, der Lieferkapazität des Roboters und der ersten Anzahl von ersten Lieferstellengruppen umfasst:
Vergleichen der Gruppenlieferanforderungen jeweils mit der Lieferkapazität des Roboters; und falls mindestens eine Gruppenlieferanforderung größer als die Lieferkapazität des Roboters ist, Verwenden der Lieferstellengruppe mit einer Gruppenlieferanforderung größer als die Lieferkapazität des Roboters unter den ersten Lieferstellengruppen als eine dritte Lieferstellengruppe, und erneutes Clustern von Lieferstellen in der dritten Lieferstellengruppe gemäß Positionsinformationen und Lieferanforderungen der Lieferstellen in der dritten Lieferstellengruppe und der Lieferkapazität des Roboters, um mindestens eine vierte Lieferstellengruppe zu bilden; und
Bestimmen der vierten Lieferstellengruppe und der ersten Lieferstellengruppen mit Ausnahme der dritten Lieferstellengruppe als die mindestens eine Lieferstellengruppe.

8. Verfahren nach Anspruch 4, wobei vor dem Auswählen (S402) der ersten Anzahl von Lieferstellen als die ersten Clustermittelpunkte das Verfahren ferner umfasst:
Bestimmen einer gesamten Lieferanforderung aller den Lieferstellen gemäß den Lieferanforderungen der Lieferstellen; und
Bestimmen der ersten Anzahl gemäß einem Verhältnis der gesamten Lieferanforderung zu der Lieferkapazität des Roboters, wobei die erste Anzahl eine ganze Zahl ist, die größer oder gleich dem Verhältnis ist.

9. Verfahren nach Anspruch 1 oder 2, wobei das Bestimmen (S203) der Ziellieferroute entsprechend der einen Lieferstellengruppe in der mindestens einen Lieferstellengruppe umfasst:
Erhalten (S503) von Positionsinformationen des ersten Roboters entsprechend der einen Lieferstellengruppe in der mindestens einen Lieferstellengruppe; und
Bestimmen (S504) der Ziellieferroute gemäß Positionsinformationen der Lieferstellen in der einen Lieferstellengruppe und den Positionsinformationen des ersten Roboters.

10. Verfahren nach Anspruch 9, wobei das Bestimmen (S504) der Ziellieferroute gemäß den Positionsinformationen der Lieferstellen in der einen Lieferstellengruppe und den Positionsinformationen des ersten Roboters umfasst:
Bestimmen einer Distanzmatrix entsprechend der einen Lieferstellengruppe, wobei die Distanzmatrix Abstände zwischen Positionen der Lieferstellen in der einen Lieferstellengruppe und den Positionsinformationen des ersten Roboters umfasst;
zufälliges Erzeugen einer Anfangsroute entsprechend der Lieferstellengruppe gemäß der Distanzmatrix;
Durchführen von Iteration auf der Anfangsroute gemäß der Distanzmatrix, und Beenden der Iteration, wenn eine vorbestimmte Bedingung erfüllt ist; und
Bestimmen der Ziellieferroute gemäß einem Iterationsergebnis.

11. Verfahren nach Anspruch 1 oder 2, wobei das Bestimmen (S203) der Ziellieferroute entsprechend der einen Lieferstellengruppe in der mindestens einen Lieferstellengruppe umfasst:
Erhalten (S603) der vorgespeicherten Ziellieferroute entsprechend der einen Lieferstellengruppe in der mindestens einen Lieferstellengruppe.

12. Verfahren nach Anspruch 11, wobei die Lieferstellengruppe P Lieferstellen umfasst; und vor dem Erhalten (S603) der vorgespeicherten Ziellieferroute entsprechend der einen Lieferstellengruppe in der mindestens einen Lieferstellengruppe das Verfahren ferner umfasst:
Bestimmen einer ersten Lieferroute gemäß Positionsinformationen der Lieferstellen in der einen Lieferstellengruppe in der mindestens einen Lieferstellengruppe und Positionsinformationen des ersten Roboters;
Steuern des ersten Roboters gemäß der ersten Lieferroute, um Waren entsprechend dem Lieferauftrag an eine Q-ten Lieferstelle in der Lieferstellengruppe zu liefern; und
Bestimmen und Speichern der Ziellieferroute gemäß Positionsinformationen von P-Q Lieferstellen, bei denen das Liefern noch nicht abgeschlossen ist, in der Lieferstellengruppe und Startpositionsinformationen des ersten Roboters.

13. Verfahren nach Anspruch 1 oder 2, wobei dem Lieferauftrag entsprechenden Waren auf einer Pufferregaleinheit angeordnet sind; und vor dem Steuern (S204) des ersten Roboters gemäß der Ziellieferroute, um die dem Lieferauftrag entsprechenden Waren an die Lieferstellen in der Lieferstellengruppe zu liefern, das Verfahren ferner umfasst:
Bestimmen der der Lieferstellengruppe entsprechenden Waren gemäß dem Lieferauftrag; und
Steuern des ersten Roboters zum Entnehmen der Waren von der Pufferregaleinheit.

14. Server, umfassend:
mindestens einen Prozessor; und
einen Speicher, der mit dem mindestens einen Prozessor kommunikativ verbunden ist, wobei
der Speicher Anweisungen speichert, die von dem mindestens einen Prozessor ausführbar sind, und die Anweisungen von dem mindestens einen Prozessor ausgeführt werden, um den mindestens einen Prozessor zu veranlassen, das Verfahren nach einem der Ansprüche 1 bis 13 durchzuführen.

## Revendications

1. Procédé de distribution de marchandises, comprenant :
obtenir (S201, S301, S401, S501, S601) des exigences de distribution d'une pluralité de points de distribution d'une tâche de distribution ;
regrouper (S202) la pluralité de points de distribution en au moins un groupe de points de distribution selon les exigences de distribution des points de distribution et une capacité de distribution d'un robot ;
déterminer (S203) un chemin de distribution cible correspondant à un seul groupe de points de distribution dans le ou les groupes de points de distribution ; et
commander (S204), selon le chemin de distribution cible, un premier robot à distribuer des marchandises correspondant à l'un seul groupe de points de distribution de la tâche de distribution aux points de distribution dans l'un seul groupe de points de distribution ;
dans lequel le regroupement (S202) de la pluralité de points de distribution en au moins un groupe de points de distribution selon les exigences de distribution des points de distribution et la capacité de distribution du robot comprend :
déterminer (S302) si un point de distribution saturé existe parmi la pluralité de points de distribution, une exigence de distribution du point de distribution saturé étant supérieure à la capacité de distribution du robot ;
déterminer (S303), si le point de distribution saturé existe, une différence entre l'exigence de distribution du point de distribution saturé et la capacité de distribution du robot comme nouvelle exigence de distribution du point de distribution saturé ; et
regrouper (S304) la pluralité de points de distribution dans au moins l'un groupe de points de distribution selon la nouvelle exigence de distribution du point de distribution saturé, des exigences de distribution de la pluralité de points de distribution dans lequel le point de distribution saturé, et la capacité de distribution du robot.

2. Procédé selon la revendication 1, dans lequel le regroupement (S304) de la pluralité de points de distribution en au moins l'un groupe de points de distribution selon la nouvelle exigence de distribution du point de distribution saturé, les exigences de distribution de la pluralité de points de distribution autres que le point de distribution saturé, et la capacité de distribution du robot comprend :
déterminer si une somme de la nouvelle exigence de distribution du point de distribution saturé et des exigences de distribution de la pluralité de points de distribution autres que le point de distribution saturé est supérieure à la capacité de distribution du robot ; et
regrouper, si la somme est supérieure à la capacité de distribution du robot, la pluralité de points de distribution en au moins l'un groupe de points de distribution selon la nouvelle exigence de distribution du point de distribution saturé, les exigences de distribution de la pluralité de points de distribution autres que le point de distribution saturé, et la capacité de distribution du robot.

3. Procédé selon la revendication 2, comprenant en outre :
déterminer la pluralité de points de distribution comme un seul groupe de points de distribution si la somme est inférieure ou égale à la capacité de distribution du robot.

4. Procédé selon la revendication 1 ou 2, dans lequel le regroupement (S202) de la pluralité de points de distribution en au moins l'un groupe de points de distribution selon les exigences de distribution des points de distribution et la capacité de distribution du robot comprend :
obtenir des informations de localisation des points de distribution ;
sélectionner (S402) une première quantité de points de distribution comme premiers centres de cluster ;
déterminer (S403) des distances entre les informations de localisation des points de distribution et les premiers centres de cluster ;
mettre en cluster (S404) tous les points de distribution selon les distances, pour former une première quantité de premiers groupes de points de distribution ;
déterminer (S405) des exigences de distribution de groupes des premiers groupes de points de distribution selon des exigences de distribution des points de distribution des premiers groupes de points de distribution respectivement ; et
déterminer (S406) au moins l'un groupe de points de distribution selon les exigences de distribution de groupes, la capacité de distribution du robot et la première quantité de premiers groupes de points de distribution.

5. Procédé selon la revendication 4, dans lequel la détermination (S406) d'au moins l'un groupe de points de distribution selon les exigences de distribution de groupes, la capacité de distribution du robot et la première quantité de premiers groupes de points de distribution comprend :
comparer séparément les exigences de distribution de groupes avec la capacité de distribution du robot ; et si toutes les exigences de distribution de groupes sont inférieures ou égales à la capacité de distribution du robot, déterminer la première quantité de premiers groupes de points de distribution comme au moins un groupe de points de distribution.

6. Procédé selon la revendication 4, dans lequel la détermination (S406) d'au moins l'un groupe de points de distribution selon les exigences de distribution de groupes, la capacité de distribution du robot et la première quantité de premiers groupes de points de distribution comprend :
comparer séparément les exigences de distribution de groupes avec la capacité de distribution du robot ; et si au moins une exigence de distribution de groupes est supérieure à la capacité de distribution du robot, sélectionner une deuxième quantité de points de distribution comme deuxièmes centres de cluster, remettre en cluster tous les points de distribution pour obtenir une deuxième quantité de deuxièmes groupes de points de distribution, et déterminer la deuxième quantité de deuxièmes groupes de points de distribution comme au moins un groupe de points de distribution, la deuxième quantité étant supérieure à la première quantité.

7. Procédé selon la revendication 4, dans lequel la détermination (S406) d'au moins l'un groupe de points de distribution selon les exigences de distribution de groupes, la capacité de distribution du robot et la première quantité de premiers groupes de points de distribution comprend :
comparer séparément les exigences de distribution de groupes avec la capacité de distribution du robot ; et si au moins une exigence de distribution de groupes est supérieure à la capacité de distribution du robot, utiliser le groupe de points de distribution avec une exigence de distribution de groupes supérieure à la capacité de distribution du robot dans les premiers groupes de points de distribution comme troisième groupe de points de distribution, et remettre en cluster des points de distribution dans le troisième groupe de points de distribution selon des informations de localisation et des exigences de distribution des points de distribution dans le troisième groupe de points de distribution et la capacité de distribution du robot, afin de former au moins un quatrième groupe de points de distribution ; et
déterminer le quatrième groupe de points de distribution et les premiers groupes de points de distribution autres que le troisième groupe de points de distribution comme au moins un groupe de points de distribution.

8. Procédé selon la revendication 4, dans lequel, avant la sélection (S402) de la première quantité de points de distribution comme premiers centres de cluster, le procédé comprend en outre :
déterminer une exigence totale de distribution de tous les points de distribution selon les exigences de distribution des points de distribution ; et
déterminer la première quantité selon un rapport de l'exigence totale de distribution à la capacité de distribution du robot, la première quantité étant un entier supérieur ou égal au ratio.

9. Procédé selon la revendication 1 ou 2, dans lequel la détermination (S203) du chemin de distribution cible correspondant à l'un seul groupe de points de distribution dans le ou les groupes de points de distribution comprend :
obtenir (S503) des informations de localisation du premier robot correspondant à l'un seul groupe de points de distribution dans le ou les groupes de points de distribution ; et
déterminer (S504) le chemin de distribution cible selon les informations de localisation des points de distribution dans l'un seul groupe de points de distribution et les informations de localisation du premier robot.

10. Procédé selon la revendication 9, dans lequel la détermination (S504) du chemin de distribution cible selon les informations de localisation des points de distribution dans l'un seul groupe de points de distribution et les informations de localisation du premier robot comprend :
déterminer une matrice de distances correspondant à l'un seul groupe de points de distribution, la matrice de distances comprenant des distances entre des localisations des points de distribution dans l'un seul groupe de points de distribution et les informations de localisation du premier robot ;
générer aléatoirement un chemin initial correspondant au groupe de points de distribution selon la matrice de distances ;
effectuer une itération sur le chemin initial selon la matrice de distances et arrêter l'itération une fois une condition prédéfinie remplie ; et
déterminer le chemin de distribution cible selon un résultat d'itération.

11. Procédé selon la revendication 1 ou 2, dans lequel la détermination (S203) du chemin de distribution cible correspondant à l'un seul groupe de points de distribution dans le ou les groupes de points de distribution comprend :
obtenir (S603) le chemin de distribution cible pré-stocké correspondant à l'un seul groupe de points de distribution dans le ou les groupes de points de distribution.

12. Procédé selon la revendication 11, dans lequel le groupe de points de distribution comprend P points de distribution ; et avant l'obtention (S603) du chemin de distribution cible pré-stocké correspondant à l'un seul groupe de points de distribution dans le ou les groupes de points de distribution, le procédé comprend en outre :
déterminer un premier chemin de distribution selon les informations de localisation des points de distribution dans l'un seul groupe de points de distribution dans le ou les groupes de points de distribution et les informations de localisation du premier robot ;
commander, selon le premier chemin de distribution, le premier robot à distribuer des marchandises correspondant à la tâche de distribution à un Q-ième point de distribution dans le groupe de points de distribution ; et
déterminer et stocker le chemin de distribution cible selon des informations de localisation des points de distribution P-Q auxquels la distribution n'a pas été complétée dans le groupe de points de distribution et des informations de localisation de départ du premier robot.

13. Procédé selon la revendication 1 ou 2, dans lequel des marchandises correspondant à la tâche de distribution sont localisées sur une unité d'étagère tampon ; et avant la commande (S204), selon le chemin de distribution cible, du premier robot à distribuer les marchandises correspondant à la tâche de distribution aux points de distribution dans le groupe de points de distribution, le procédé comprend en outre :
déterminer les marchandises correspondant au groupe de points de distribution selon la tâche de distribution ; et
commander le premier robot à récupérer les marchandises depuis l'unité d'étagère tampon.

14. Serveur, comprenant :
au moins un processeur ; et
une mémoire connectée par communication au ou aux processeurs, dans lequel
la mémoire stocke des instructions exécutables par le ou les processeurs, et les instructions sont exécutées par le ou les processeurs pour amener le ou les processeurs à mettre en œuvre le procédé selon l'une quelconque des revendications 1 à 13.
